# EUROPÄISCHE PATENTANMELDUNG

(11) **EP 0 654 326 A1**
(43) Veröffentlichungstag der Anmeldung: **24.05.1995**
(21) Anmeldenummer: 94116675.3
(22) Anmeldetag: 21.10.1994
(51) Int. Cl.: B25J 18/06

(54) **Flexibler Aktuator**

(30) Priorität: 29.10.1993 DE 4337096
(71) Anmelder: SIEMENS AKTIENGESELLSCHAFT, D-80333 München (DE)
(72) Erfinder: Feiten, Wendelin, Dr., D-85579 Neubiberg (DE); Neubauer, Werner, D-81547 München (DE)

(57) **Zusammenfassung**

Mit der Erfindung wird ein Aktuator in Form einer Schraubenfeder (S) vorgestellt. Die Bewegung des Aktuators in verschiedenen Richtungen wird dadurch erzeugt, daß an einem Ende der Spiralfeder Zugstränge (Z1,Z2,Z3) angebracht sind, welche zum Zusammenziehen der Feder entlang der Feder durch Führungsösen (OE) geführt sind und am anderen Ende frei austreten. Zum Strecken der Feder gegen eine von außen einwirkende Kraft sind Zugstränge (D1,D2,D3) vorgesehen, welche den jeweils oberen und unteren überlappenden Rand (R1,R2) von zwei benachbarten Schraubenfederwindungen (W1,W2) in Form von Schlaufen umfassen. Diese Zugstränge verlaufen in Führungsschlitzen (SL), die dafür entlang des Aktuators vorgesehen sind. Übt man nun Zug auf die frei austretenden Zugstränge aus so läßt sich durch eine gezielte Streckung oder Zusammenquetschung des Aktuators eine Bewegung in verschiedenste Richtungen erzielen.
Durch eine Aneinanderreihung mehrerer solcher Aktuatoren kann die Zahl der Bewegungsfreiheitsgrade erhöht werden.
Einsatzgebiete für solche Aktuatoren sind vor allen Dingen im Konsumbereich, also im Bereich der Haushaltsroboter, oder im Low-cost Fertigungsroboterbereich, zu sehen.

## Beschreibung

Immer häufiger werden auch komplizierte Handhabungen durch Maschinen verrichtet. In manchen Fällen müssen auch unzugängliche oder für den Menschen gefährliche Stellen durch Aktuatoren erreichbar sein. Beispiele solcher Aktuatoren sind Roboterarme, die in der industriellen Fertigung eingesetzt werden, oder Mikroaktuatoren, welche für Greifer beispielsweise Verwendung finden.

Vielfach sind industriell eingesetzte Aktuatoren komplizierte Geräte, welche mit umfangreicher Sensorik ausgestattet sind und deren Bewegungsmechanik eine aufwendige Regelung und Steuerung erfordert. Mit der zunehmenden Technisierung von Bereichen, die außerhalb sogenannter High-tech-Umgebungen liegen, erscheint es wünschenswert, kostengünstig zu fertigende und einfach zu steuernde Aktuatoren zur Verfügung zu haben. Ein künftiger Einsatzbereich solcher Low-cost-Geräte wäre beispielsweise bei Haushaltsgeräten denkbar.

Aktuatoren sind in großer Zahl bekannt. Beispielsweise wird in den Poceedings des IEEE Workshop on Micro Electro Mechanical Systems (1991-1, S 204 - 209) von Koichi Suzumori, Shoichi Iikura und Hirohisa Tanaka ein flexibler Mikroaktuator für Miniaturroboter vorgestellt. Er besteht aus einem sich länglich erstreckenden flexiblen Schlauch, der entlang seiner Längsachse in drei Kammern aufgeteilt wird. Durch Be- und Entlüftung der jeweiligen Kammern kann man erreichen, daß sich der Schlauch verbiegt. Diese Verbiegung wird benutzt, um z. B. mit paarweise angeordneten solchen Aktuatoren Gegenstände zu greifen. Dort werden auch Verstärkungsfasern vorgestellt, welche im Schlauch schraubenförmig angeordnet sind. Mit diesen flexiblen Mikroaktuatoren sind Längenänderungen bis zu 15% möglich.

Aus der europäischen Offenlegungsschrift 0194039 ist eine fernbetätigbare Manipuliereinrichtung mit einem Düsenkopf zum Ausdüsen eines Fluidstromes bekannt, mit einer zur Achse des Düsenkopfes rechtwinkligen Komponente, wobei der Düsenkopf durch ein flexibles längliches Teil mit einem Referenzpunkt verbindbar ist, mit einer Einrichtung zum Steuern vom Fluidstrom durch die Düsen, wobei die Einrichtung durch Stränge betätigbar ist, welche in der Lage sind der Krümmung des flexiblen länglichen Teils zu folgen, wodurch bei Betrieb das räumliche Positionieren des Düsenkopfes durch differenzierbare Fernbetätigung der Stränge durchführbar ist. Als flexibles längliches Teil ist ein flexibler Schlauch offenbart, der aber auch durch einen unflexiblen Schlauch, wie sich aus der Beschreibung ergibt, ersetzt werden kann. Solche Druckschläuche, wie sie üblicherweise für den Transport von Flüssigkeiten Verwendung finden, können nur begrenzte Längenänderungen durchführen, die sich im Bereich jener Längenänderung bewegen wie sie auch von Suzumori offenbart wurden.

Aufgabe der Erfindung ist es einen flexiblen Aktuator anzugeben, welcher insbesondere in Erstreckungsrichtung eine sehr große elastische Deformierbarkeit aufweist und dessen aufbietbare Kraft in jeder seiner Bewegungsrichtungen vorgebbar ist.

Diese Aufgabe wird gemäß den Merkmalen des Patentanspruchs 1 gelöst.

Weiterbildungen der Erfindung ergeben sich aus den Unteransprüchen.

Ein besonderer Vorteil des erfindungsgemäßen Aktuators besteht darin, daß er aus einer in einem großen Bereich längselastischen Schraubenfeder ausgeführt wird. Hierdurch wird besonders einfach ein großer Bewegungsspielraum für einen am ersten Ende des Aktuators angebrachten Effektor erreicht. Der erfindungsgemäße Aktuator hat den weiteren Vorteil, daß die Steuerung oder die Regelung nicht so exakt ausgeführt werden muß, bzw. daß auf hochempfindliche Sensorik verzichtet werden kann, da bei einem Anstoßen des Effektors, welcher beispielsweise an einem ersten Ende befestigt wird, durch die elastische Verformbarkeit des Aktuators keine Gegenstände beschädigt werden. Durch die besondere Ausgestaltung der Windungsprofilform wird erreicht, daß mit den Zugsträngen selbst bei einer Streckung der Schraubenfeder eine Kraft aufgebracht werden kann, welche von der Federkonstante unabhängig ist.

Eine S- oder fleischerhakenförmige Profilform hat den Vorteil, daß zwei benachbarte Windungen der Schraubenfeder, deren Ränder sich überlappen auf einer großen Strecke gegeneinander frei verschiebbar sind.

Wenn man die zwei zusammenwirkenden Zugstränge für Streckung und Stauchung auf lediglich einer Achse parallel zur Federlängsachse verlaufen läßt, so erzielt man günstigerweise einen besonders großen Bewegungsspielraum für den Aktuator.

Wenn man die zwei zusammenwirkenden Zugstränge für Streckung und Stauchung auf einer Wickelvorrichtung auf- und abwickelt, so spart man Antriebselemente und kann auf einfache Art sicherstellen, daß eine eventuelle mechanische Vorspannung der beiden Zugstränge konstant bleibt. Solch eine Zugspannung kann eventuell erforderlich sein, um mit einem erfindungsgemäßen Aktuator größere Lasten bewegen zu können.

Die erfindungsgemäß vorgesehenen Maßnamen zur Konstanthaltung der Abstände zwischen den einzelnen Windungen der Schraubenfeder wirken sich günstig auf die Lastverteilung über den Aktuator und auf dessen Bewegungsspielraum aus.

Durch die Anordnung mehrerer erfindungsgemäßer Aktuatoren hintereinander erreicht man, daß beispielsweise um Ecken herum gegriffen werden kann, so daß sich ein noch größerer Bewegungsspielraum für eine derartige Anordnung ergibt.

Durch die Führung der Zugstränge entlang des flexiblen Aktuators wird günstigerweise eine besonders kompakte Bauform erzielt.

Durch die Anbringung einer flexiblen Hülle um den Aktuator erreicht man günstigerweise, daß in dem Aktuator befindliche Versorgungsleitungen gegen äußere Einwirkungen geschützt werden, oder daß der Aktuator selbst vor Korrosion geschützt wird, oder daß ein Stoff, in welchem der Aktuator eingesetzt wird, durch diesen nicht verunreinigt wird.

Günstigerweise wird am ersten Ende, an welchem die Zugstränge befestigt sind, ein Effektor angebracht. Dieser Effektor kann beispielsweise eine Düse oder ein Greifer sein. Dieser Effektor hat dann einen größtmöglichen Bewegungsspielraum.

Durch die Führung von Stromversorgungskabeln oder Hohlschläuchen innerhalb des Aktuators kann man von einem Ende zum anderen Ende leicht Stoffe transportieren, oder die Stromzufuhr zu beispielsweise einem Schweißgerät ermöglichen.

Durch die Anregung eines erfindungsgemäßen Aktuators mit hochfrequenten mechanischen Schwingungen können vorteilhaft die auftretenden Reibkräfte zwischen der Schraubenfeder und den Zugsträngen verkleinert werden.

Im folgenden wird die Erfindung anhand von Figuren weiter erläutert.

Figur 1 zeigt einen erfindungsgemäßen Aktuator in drei unterschiedlichen Bewegungszuständen.

Fig. 2 zeigt eine Anordnung von zwei erfindungsgemäßen Aktuatoren hintereinander.

Figur 3 zeigt das Prinzip der Bewegungssteuerung an einem erfindungsgemäßen Aktuator.

Figur 4 zeigt eine besondere Ausführungsform eines erfindungsgemäßen Aktuators.

Figur 5 zeigt eine Ansicht eines Teils eines erfindungsgemäßen Aktuators und eine zugehörige Schnittfläche.

Figur 6 zeigt eine besondere Ausgestaltung des erfindungsgemäßen Aktuators zur Konstanthaltung der Abstände zwischen drei benachbarten Windungen.

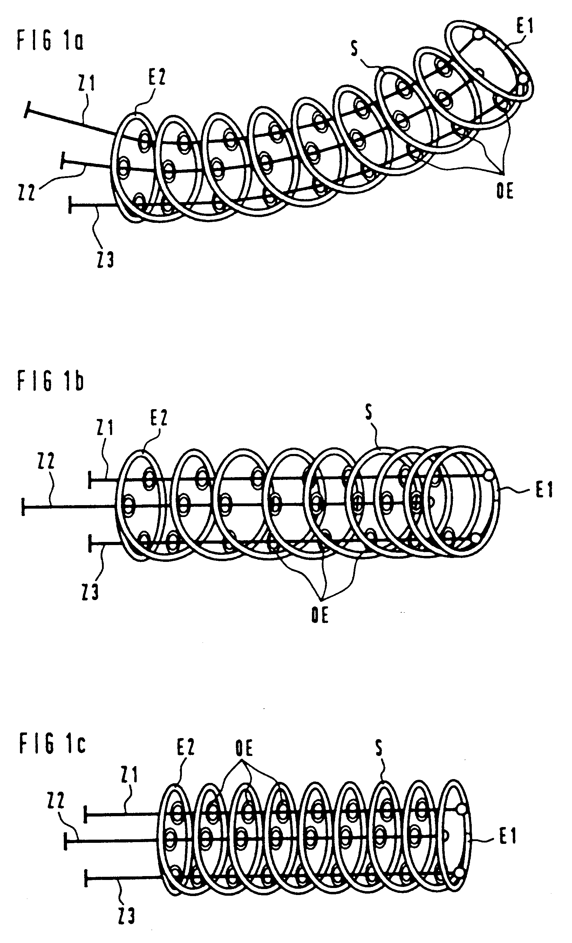

Wie man aus Fig. 1 erkennt, besteht ein zur Bewegung des Aktuators durch Stauchung der Schraubenfeder S vorgesehener Teil eines erfindungsgemäßen Aktuators aus einer elastischen Schraubenfeder S, welche beispielsweise aus einem elastischen Kunststoff oder Stahl ausgeführt sein kann. Zur besseren Veranschaulichung der mechanischen Zusammenhänge und dem damit verbundenen Wirkungsprinzip wird zunächst dieser Teil des erfindungsgemäßen Aktuators genauer erläutert.
Entlang dieser Schraubenfeder S sind gleichmäßig verteilt Führungsösen OE für Zugstränge Z1 bis Z3 angebracht. Wie Fig. 1 weiter zeigt, verlaufen die Zugstränge entlang des Aktuators nahezu achsparallel. Diese Zugstränge Z1 bis Z3 sind am Ende E1 der Schraubenfeder S befestigt. Sie sind entlang der Schraubenfeder S durch die Ösen OE geführt und treten am Ende E2 der Schraubenfeder S frei beweglich aus. In Fig. 1 sind weiterhin drei unterschiedliche Bewegungszustände des erfindungsgemäßen Aktuators dargestellt.

Im Teil a erkennt man, daß auf den Zugstrang Z1 Zug ausgeübt wurde. Wenn man sich das Ende E2 festgehalten denkt, so bewirkt dieser Zug, daß die Ösen, durch welche der Zugstrang Z1 geführt ist, näher aneinanderrücken. Dadurch wird der erfindungsgemäße Aktuator in Richtung des Zugstranges Z1 gekrümmt. Gleichzeitig werden die frei beweglichen Zugstränge Z2 und Z3 in den Aktuator eingezogen.

Fig. 1b zeigt dasselbe Beispiel für den Zugstrang Z2. Durch Ausübung von Zug auf den Zugstrang Z2 wird das Ende E1 in Richtung des Betrachters bewegt und der erfindungsgemäße Aktuator entsprechend gekrümmt. Die Zugstränge Z1 und Z3 werden hierbei durch die entsprechenden Führungsösen in den Aktuator eingezogen.

In Fig. 1c ist eine Verkürzung des erfindungsgemäßen Aktuators veranschaulicht. Diese Verkürzung wird erreicht, indem gleichzeitig Zug auf die drei Zugstränge Z1 bis Z3 ausgeübt wird. Bei festgehaltenem Ende E2 bewirkt dieser Zug, daß die Schraubenfeder S entlang ihrer Längsrichtung verkürzt wird. Ein am Ende E1 befestigter Effektor wird dann entlang der Längsrichtung der Schraubenfeder S bewegt. Durch diese erfindungsgemäße Ausgestaltung eines Aktuators erreicht man, daß ein Effektor innerhalb einer Kugel, deren Radius der Länge der Schraubenfeder S entspricht an nahezu jeden Punkt manövriert werden kann.

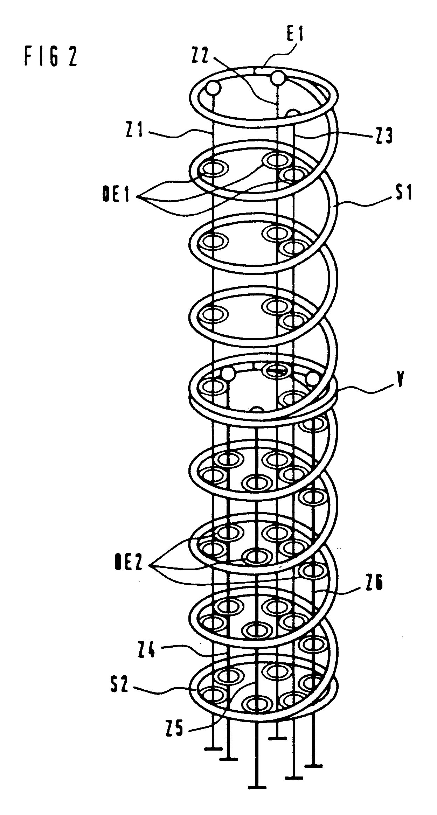

Fig. 2 zeigt eine Anordnung von zwei in Figur 1 beschriebenen Teilen eines erfindungsgemäßen Aktuators hintereinander. Hierzu sind die Schraubenfedern S2 und S1 an einer Verbindungsstelle V verbunden. Für die erste Schraubenfeder S sind Zugstränge Z1 bis Z3 durch Ösen OE1 vorgesehen für die zweite Schraubenfeder S2 sind Zugstränge Z4 bis Z6 durch Führungsösen OE2 vorgesehen. Die beiden so verbundenen Aktuatoren können unabhängig voneinander betätigt werden. Die Erzeugung der Bewegung wurde bereits in Fig. 1 beschrieben. Die Betätigung der Zugstränge, welche beispielsweise Stahl- oder Kunststoffseile sein können, kann beispielsweise durch Kabeltrommeln oder über elektrische Vorrichtungen erfolgen. Es ist aber auch denkbar, daß bei kleineren Vorrichtungen direkt über eine Umlenkrolle von Hand mechanischer Zug auf die Zugstränge ausgeübt wird.

Im wesentlichen wird die Funktion eines solchen Aktuators durch die Federkonstante der Schraubenfeder und durch das Gewicht des Aktuators, welcher beispielsweise am Ende E1 angebracht ist bestimmt. Ein weiteres Kriterium stellt die Zugbelastbarkeit der Zugstränge und die Führungskraft der Führungsösen dar. Durch eine geeignete Kombination dieser verschiedenen Parameter bei hintereinander angeordneten Anordnungen, kann man verschiedenste Bewegungscharakteristiken und Belastbarkeiten erzielen.

Der zweite Bestandteil eines erfindungsgemäßen Aktuators, welcher eine aktive Streckung unabhängig von der Federkonstante der Schraubenfeder S erlaubt, verbessert die Beweglichkeit des Aktuators und vergrößert damit die Zahl seiner Einsatzgebiete entscheidend.Dieser erfindungsgemäße Aktuator ist besonders leicht herzustellen und von seiner Konstruktion her nicht besonders aufwendig. Er erschließt damit neue Einsatzgebiete. Man kann sich beispielsweise vorstellen, daß er bei einem autonomen Saugroboter, oder allgemein bei einem Reinigungsroboter, oder beispielsweise einem Lackierungsroboter eingesetzt werden kann. Weitere Vorteile sind, daß er kostengünstig fertigbar ist und daß er nachgiebig ist in jenem Sinne, daß er
- bei unbeabsichtigtem Kontakt mit Hindernissen weder diese beschädigt noch selber beschädigt wird,
- sich in beengten Arbeitsräumen an die Kontur von Hindernissen bzw. offenen Passagen passiv anpassen kann.

Bei der Ausführung des erfindungsgemäßen Aktuators können auch durchaus mehr als drei Zugstränge Verwendung finden. Wichtig ist es auch zu beachten, daß man durch die Aneinanderreihung mehrerer erfindungsgemäßer Aktuatoren die Zahl der Bewegungsfreiheitsgrade erhöht.

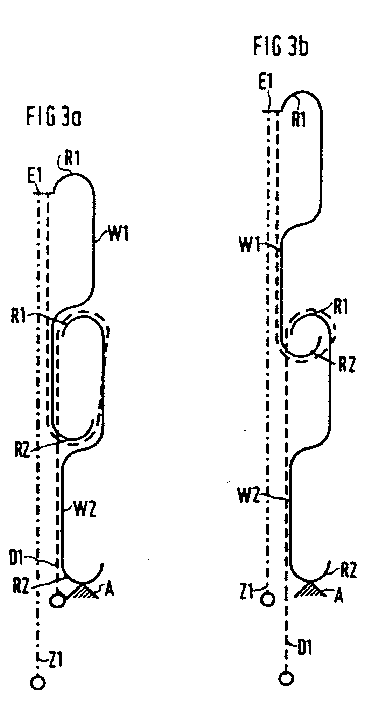

In Figur 3a und 3b sind zwei Schnitte durch einen erfindungsgemäßen Aktuator dargestellt, um die prinzipielle Funktionsweise bei der Bewegung eines solches Aktuators zu veranschaulichen. Dieses Schnittbild erhält man, wenn man eine Schnittebene wählt, welche die Federlängsachse des Aktuators enthält und mit ihr alle Windungen der Schraubenfeder einmal durchschneidet. Blickt man nun auf diese Schnittebene so sieht man die einzelnen durchtrennten Windungen.

Diese Prinzipdarstellung wird in Figur 3 und in den folgenden Figuren verwendet, sofern das nicht anders beschrieben wurde. Um aus diesem Schnitt eine Schraubenfeder für einen erfindungsgemäßen Aktuator zu erhalten, muß man es um die Federlängsachse rotieren und dabei eine Translation entlang der Federlängsachse durchführen.

Im einzelnen sind in Figur 3 zwei benachbarte Windungen W1 und W2 eines Aktuators zu sehen. Weiterhin sind deren obere überkragende Ränder R1 und deren untere überkragende Ränder R2 gezeigt. Das Profil W2 ist dabei mit seinem unteren überkragenden Rand R2 an einem Auflager A befestigt.
Um eine Bewegung des Aktuators zu erzeugen, sind an einem Ende E1 des erfindungsgemäßen Aktuators Zugstränge Z1 und D1 angebracht. Figur 3a zeigt dabei den Schnitt durch einen Teil des erfindungsgemäßen Aktuators, wobei dieser Aktuator sich im gestauchten Zustand befindet, in welchem die Schraubenfeder zusammengepreßt ist. Dies läßt sich zum Beispiel daran erkennen, daß der Zugstrang Z1 aus dem Aktuator herausgezogen ist. Daneben ist der Zugstrang D1 dargestellt, welcher in Figur 3a in den Aktuator eingezogen ist. Man kann auch erkennen, daß dieser Zugstrang D1 den oberen Rand R1 der Windung W2 des Aktuators und den unteren Rand R2 der Windung W1 des Aktuators umfaßt. Dabei bildet er eine Schlaufe um diese beiden Ränder.

Figur 3b zeigt einen Schnitt durch die Windungen eines erfindungsgemäßen Aktuators, wobei sich der Aktuator nun in einem gestreckten Zustand befindet. Dies kann man zum einen daran erkennen, daß der Zugstrang Z1 nun vollständig in den Aktuator eingezogen ist und daß der Zugstrang D1 aus dem Aktuator herausgezogen ist. Dieser Aktuator in Figur 3b, geht also aus dem in Figur 3a hervor, indem man Zug auf den Zugstrang D1 ausübt. Dabei geschieht folgendes:
Die Windung W2 des erfindungsgemäßen Aktuators ist fest gelagert. Der Zugstrang D1 ist an einem Ende E1 der Windung W1 des erfindungsgemäßen Aktuators befestigt. Übt man nun Zug auf den Zugstrang D1 aus, so wird die Schlaufe, welche der Zugstrang D1 um den unteren Rand R2 der Windung W1 und den oberen Rand R1 der Windung W2 bildet, durch den Zug verkleinert. Dies führt dazu, daß sich der obere Rand R1 der Windung W2 des erfindungsgemäßen Aktuators und der untere Rand R2 der Windung W1 des erfindungsgemäßen Aktuators aufeinander zu bewegen. So wird erfindungsgemäß erreicht, daß die Schraubenfeder, die beispielsweise aus einem solchen Profil besteht, wie es hier im Schnittbild gezeigt ist, durch einen Zug an einem erfindungsgemäß vorgesehenen Zugstrang D1 gestreckt werden kann. Dieser Streckvorgang kann insbesondere auch entgegen eine von außen auf den Aktuator einwirkende Kraft erfolgen.

Bei der Betrachtung von Figur 3 ist weiterhin zu beachten, daß es sich hierbei nur um eine prinzipielle Darstellung handelt. In einem real ausgeführten erfindungsgemäßen Aktuator würden mehrere solcher Zugstränge Z1 und D1 paarweise zusammenarbeiten und beispielsweise gleichmäßig über den Umfang eines erfindungsgemäßen Aktuators verteilt sein. Damit sind entsprechend den Figuren 1 und 2 beliebige Bewegungen erzeugbar. Der erfindungsgemäße Aktuator weist jedoch den großen Vorteil auf, daß durch den Zugstrang D1 auch in Längsrichtung Druck durch einen solcher Art ausgebildeten erfindungsgemäßen Aktuator ausgeübt werden kann, der unabhängig ist von beispielsweise einer Federkonstante eines solchen Aktuators.

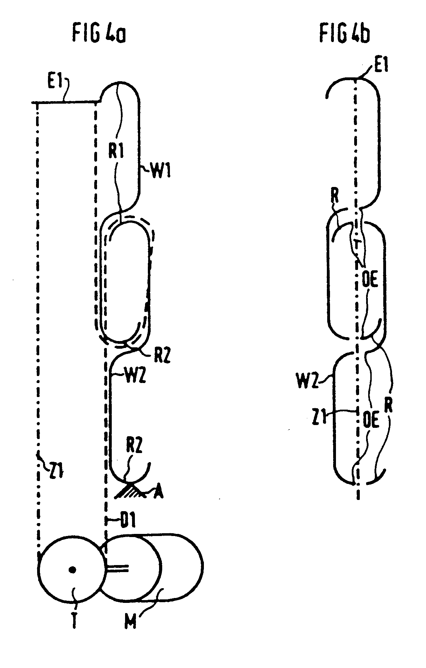

Figur 4 zeigt eine besondere vorteilhafte Ausführungsform eines erfindungsgemäßen Aktuators. Im Teil a ist wie auch in Figur 3 ein beispielhafter erfindungsgemäßer Aktuator in seinem Schnittbild dargestellt. Die Bezeichnungen sind hier entsprechend verwendet. Zusätzlich ist ein Antriebsmotor M und eine Wickelvorrichtung T für die Zugstränge Z1 und D1 dargestellt. Diese Ausführungsform nutzt den Sachverhalt, daß die Längenänderung der beiden Zugstränge D1 und Z1 bei einer Betätigung des erfindungsgemäßen Aktuators dieselbe ist. So kann beispielsweise ein solches Zugstrangpaar mittels einer einzigen Wickelvorrichtung T gemeinsam betrieben werden. Hier ist es beispielsweise so, daß der Zugstrang Z1 von links auf T läuft und der Zugstrang D1 von rechts auf T läuft. Wenn man nun den Motor einschaltet und T betätigt, so wird je nach Drehrichtung einmal D1 aufgewickelt und Z1 abgewickelt oder umgekehrt.

Figur 4b zeigt eine vorteilhafte Ausgestaltung des erfindungsgemäßen Aktuators. Ein Zugseil Z1 ist hier beispielsweise an einem Ende E1 des Aktuators befestigt und durchläuft Ösen OE, welche in die Profile entlang der Längsrichtung des erfindungsgemäßen Aktuators eingebracht wurden. Dies hat den Vorteil, daß man einen solchen Aktuator noch platzsparender aufbauen kann.

Auch hier ist wieder zu berücksichtigen, daß es sich nur um prinzipielle Darstellungen handelt. Der Übersichtlichkeit halber sind deshalb auch nicht sämtliche Details ausgeführt. Wie man solche Zugstränge beispielsweise führen kann, ist auch den Figuren 1 und 2 zu entnehmen. Zusätzlich ist zu beachten, daß die hier dargestellte Schnittform einer solchen Windung W1 und W2 eines erfindungsgemäßen Aktuators nicht zwingend ist, sondern daß es sich hierbei nur um ein Beispiel für ein solches Profil handelt. Es ist durchaus denkbar, daß auch Z-förmige Profile oder andere geeignete Formen verwendet werden.

Figur 5 zeigt eine Teilansicht eines erfindungsgemäßen Aktuators. Hier ist ein Ausschnitt der Schraubenfeder S dargestellt. Weiterhin ist ein Profil dieser Schraubenfeder P zu sehen, welches sich aus einem Schnitt entlang der Linie AB und einer Blickrichtung auf diese Schnittfläche ergibt. An der Seite dieser Schraubenfeder S sind Führungsschlitze für die erfindungsgemäß vorgesehenen Zugstränge D vorgesehen. Diese sind mit SL bezeichnet. Das sich aus dem Schnitt ergebende Profil P weist hier deutlich erkennbar überkragende Ränder R1 und R2 auf. Ein solches Profil kann beispielsweise aus einem sehr dünnen Federstahl hergestellt werden und in Form eines erfindungsgemäßen Aktuators schraubenförmig aufgewickelt werden.

Auch hierbei handelt es sich nur um ein Beispiel. Es können auch andere Profilformen für einen erfindungsgemäßen Aktuator verwendet werden. Sie müssen lediglich den mechanischen Anforderungen an einen solchen Aktuator genügen und es muß durch die Profilform sichergestellt sein, daß zwei nebeneinanderliegende Windungen der Schraubenfeder mit ihren überkragenden Rändern gegeneinander verschiebbar sind.

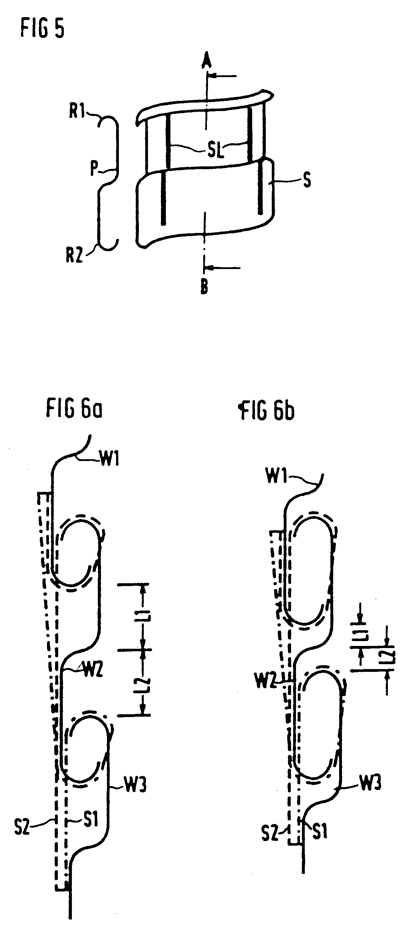

Figur 6 zeigt einen Ausschnitt einer weiteren vorteilhaften Ausgestaltung eines erfindungsgemäßen Aktuators. Dort sind drei benachbarte Windungen einer Schraubenfeder W1 bis W3 dargestellt. Durch Zugstränge S2 und S1, welche zusätzlich angebracht sind, kann man erreichen, daß sich zwischen den benachbarten Windungen ein äquidistanter Abstand einstellt. Dies geschieht wie folgt:
Die Windungen W1 bis W3 weisen die erforderliche Profilform mit entsprechend überkragenden Rändern oben und unten auf. An einer Windung W3 und W1 werden zusätzlich Zugstränge S1 und S2 angebracht. Zur Konstanthaltung der Lage von W2 exakt zwischen W1 und W3 wird nun der Zugstrang S1 einmal um den oberen Rand von W3 und um den unteren Rand von W2 geführt und dann ab W1 befestigt. Zum anderen wird der Zugstrang S2 von der Befestigung an W1 ausgehend um den unteren Rand von W1 und den oberen Rand von W2 geführt und umfaßt diese beiden Ränder in Form einer Schlaufe. Anschließend wird er an der Windung W3 befestigt. Durch diese Maßnahme wird sichergestellt, daß der Abstand L1 und L2 immer identisch ist. Das heißt, die Windung W2 der erfindungsgemäßen Anordnung befindet sich immer exakt zwischen W1 und W3.
Bei einem Zusammendrücken des erfindungsgemäßen Aktuators wird durch die so geführten Zugstränge S2 und S1 sichergestellt, daß auch bei einer Stauchung der Schraubenfeder die Abstände L1 und L2 gleich sind. Dies kann man deutlich der Prinzipdarstellung in Figur 6b entnehmen. Vorteilhaft kann es bei einer erfindungsgemäßen Ausführungsform vorgesehen sein, mehrerer solcher Anordnungen wie in Figur 6 dargestellt hintereinander zu verwenden, um den gesamten Aktuator so auszugestalten, daß sich sämtliche Windungen immer im gleichen Abstand voneinander befinden. Weiterhin kann es vorgesehen sein, die Zugstränge mit einer hochfrequenten Schwingung anzuregen, beispielsweise Ultraschall, um die auftretenden Reibkräfte zwischen den Strängen und den Rändern, um welche sie geführt sind, zu vermindern.

## Patentansprüche

1. Flexibler Aktuator,
a) bei dem eine Schraubenfeder (S) aus mindestens einem elastisch verformbaren Material vorgesehen ist,
b) bei dem die Querschnittsfläche einer Windung der Schraubenfeder (S) in Längsrichtung der Schraubenfeder ein längliches Profil aufweist, welches an seinen Enden jeweils einen überkragenden Rand besitzt, wobei der erste Rand zur Federlängsachse hin und der zweite Rand von der Federlängsachse weg überkragt,
c) bei dem die Schraubenfeder so ausgestaltet ist, daß sich der jeweils erste Rand und der jeweils zweite Rand von zwei benachbarten Windungen der Schraubenfeder überlappen,
d) bei dem am Umfang der Schraubenfeder gleichmäßig verteilt Führungsösen (OE) so vorgesehen sind, daß sie in Erstreckungsrichtung der Schraubenfeder auf mindestens drei ersten parallelen Achsen liegen, welche nahezu gleichen Abstand voneinander haben,
e) bei dem entlang der ersten parallelen Achsen durch die Ösen (OE) erste Zugstränge (Z1,Z2,Z3) geführt sind, welche alle am ersten Ende (E1) der Schraubenfeder (S) befestigt sind,
f) bei dem am Umfang der Schraubenfeder gleichmäßig verteilt Führungsschlitze (SL) so vorgesehen sind, daß sie in Erstreckungsrichtung der Schraubenfeder auf mindestens drei zweiten parallelen Achsen liegen, welche nahezu gleichen Abstand voneinander haben,
g) bei dem entlang der zweiten parallelen Achsen durch die Führungsschlitze (SL) zweite Zugstränge (D1,D2,D3) so geführt sind, daß sie jeweils die sich überlappenden ersten und zweiten Ränder in Form jeweils mindestens einer Schlaufe umfassen, wobei diese zweiten Zugstränge (D1,D2,D3) alle am ersten Ende (E1) der Schraubenfeder (S) befestigt sind,
h) bei dem eine gewünschte Bewegungsrichtung dadurch erzeugt wird, daß auf mindestens einen der Zugstränge (Z1,Z2,Z3,D1,D2,D3) am zweiten Ende (E2) der Schraubenfeder (S) Zug ausgeübt wird und dadurch die Führungsösen (OE), durch welche dieser mindestens eine erste Zugstrang (Z1,Z2,Z3) geführt ist näher aneinander rücken, beziehungsweise die sich überlappenden Ränder welche dieser Zugstrang (D1,D2,D3) umfaßt näher aneinander rücken.

2. Flexibler Aktuator nach Anspruch 1, bei dem das Profil der Querschnittsflache S-, oder fleischerhakenförmig ist.

3. Flexibler Aktuator nach einem der Ansprüche 1 bis 2, bei dem die ersten und Zweiten Parallelen Achsen übereinander liegen.

4. Flexibler Aktuator nach Anspruch 3, bei dem jeweils die zwei auf einer Achse verlaufenden parallelen ersten und zweiten Zugstränge auf einer gemeinsamen Wickelvorrichtung gewickelt werden.

5. Flexibler Aktuator nach einem der Ansprüche 1 bis 4, bei dem die Äquidistanz von drei benachbarten Windungen (W1,W2,W3)der Schraubenfeder (S) wie folgt sichergestellt wird:
a) es sind zusätzlich dritte Zugstränge (S1,S2) nach Art der zweiten Zugstränge mit zugehörigen Führungsschlitzen (SL) vorgesehen, von denen jeweils zwei welche zusammenwirken parallel verlegt werden,
b) der erste parallel verlegte Zugstrang (S1)wird an der ersten (W1)und an der dritten benachbarten Windung (W3) befestigt und umfaßt lediglich die sich überlappenden Ränder der zweiten (W2,W3) und dritten benachbarten Windung,
c) der zweite parallel verlegte Zugstrang (S2) wird an der ersten (W1) und an der dritten (W3) benachbarten Windung befestigt und umfaßt lediglich die sich überlappenden Ränder der ersten (W1) und zweiten (W2) benachbarten Windung.

6. Flexibler Aktuator, bei dem mindestens zwei flexible Aktuatoren nach einem der obigen Ansprüche in Erstreckungsrichtung der Schraubenfedern (S1,S2) miteinander verbunden (V) sind.

7. Flexibler Aktuator nach Anspruch 6,
bei dem ein Aktuator (S2) Führungsösen (OE1) und Führungsschlitze für die Zugstränge (Z1,Z2,Z3,Z4,Z5,Z6) des anderen Aktuators (S1) aufweist.

8. Flexibler Aktuator nach einem der vorhergehenden Ansprüche, der von einer flexiblen Hülle umgeben ist.

9. Flexibler Aktuator nach einem der voranstehenden Ansprüche, bei dem innerhalb der Schraubenfeder (S1,S2), mindestens ein Hohlschlauch, oder ein Stromkabel entlang deren Erstreckungsrichtung verläuft.

10. Flexibler Aktuator nach einem der voranstehenden Ansprüche, bei dem zur Verringerung der auftretenden Reibung zwischen Zugsträngen und Schraubenfeder mindestens ein Zugstrang und/oder die Schraubenfeder mit hochfrequenten Schwingungen angeregt wird.
